(19) **Europäisches Patentamt**
**European Patent Office**
**Office européen des brevets**

(11) Publication number: **0 329 388 B1**

# EUROPEAN PATENT SPECIFICATION

(45) Date of publication of patent specification: **02.11.94**   (51) Int. Cl.⁵: **B29C 33/60**, C08G 18/38

(21) Application number: **89301398.7**

(22) Date of filing: **15.02.89**

(54) **Plastic lenses having high-refractive index and process for the preparation thereof.**

(30) Priority: **17.02.88 JP 32840/88**
**17.02.88 JP 32841/88**
**22.02.88 JP 37524/88**

(43) Date of publication of application:
**23.08.89 Bulletin 89/34**

(45) Publication of the grant of the patent:
**02.11.94 Bulletin 94/44**

(84) Designated Contracting States:
**CH DE FR GB IT LI NL**

(56) References cited:
**EP-A- 0 235 743**
**EP-A- 0 271 839**

(73) Proprietor: **MITSUI TOATSU CHEMICALS, Inc.**
**2-5 Kasumigaseki 3-chome**
**Chiyoda-Ku Tokyo 100 (JP)**

(72) Inventor: **Nagata, Teruyuki**
**154, Shiraganemachi**
**Omuta-shi Fukuoka-ken (JP)**
Inventor: **Okazaki, Koju**
**35, Yamashitamachi**
**Omuta-shi Fukuoka-ken (JP)**
Inventor: **Miura, Tohru**
**1612-1-26, Kosugayacho**

**Sakae-ku**
**Yokohama-shi Kanagawa-ken (JP)**
Inventor: **Kajimoto, Nobuyuki**
**4-1413-1315, Shiomidai 1-chome**
**Isogu-ku**
**Yokohama-shi Kanagawa-ken (JP)**
Inventor: **Kanemura, Yoshinobu**
**2882, Iijimacho**
**Sakae-ku**
**Yokohama-shi Kanagawa-ken (JP)**
Inventor: **Sasagawa, Katsuyoshi**
**1510-1-411, Shinyoshidacho**
**Kohuku-ku**
**Yokohama-shi Kanagawa-ken (JP)**

(74) Representative: **Stuart, Ian Alexander et al**
**MEWBURN ELLIS**
**York House**
**23 Kingsway**
**London WC2B 6HP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to plastic lenses and processes for preparing the same. In preferred embodiments, the present invention relates to a method for preparing plastic lenses having a high-refractive index, high surface accuracy and excellent optical properties.

Prior to the present invention, compositions including, for example, diethylene glycol bis(allyl carbonate) (hereinafter abbreviated as DAC), PMMA, and polycarbonates were used as raw material for preparing plastic lenses. In a known method in which an internal releasing agent is used to improve mold release characteristics in molding these raw materials, butyl phosphate is added to DAC. However, the appearance of molded articles is impaired thereby. [See for example Seiichi Mima, "Polymer Digest", 3,39 (1984).]

In molding polyurethane and S-alkyl thiocarbamic acid ester lenses, it is difficult to release the lens from a mold after polymerization. In order to solve this problem, inventors of the present application have already suggested a method in which an external releasing agent is employed (Japanese Patent Laid-open Publication No. 267316/1987 and the like) and a method in which a mold made from a polyolefin resin is employed (Japanese Patent Laid-open Publication No. 236818/1987).

However, these mold releasing methods are still insufficient, since the lenses prepared from the resins are cast and polymerized.

In the method in which an external releasing agent is employed, a surface treatment material for the inside surface of the mold is partially transferred to the surface and interior of the polymerized lenses, causing the lens surfaces to be uneven and turbid. In addition, mold release treatment is required each time the mold is repeatedly used. Accordingly, this suggested method is intricate, reduces lens productivity, and thus is extremely uneconomical.

Further, the above method causes deformation of the polyolefin resin mold at the elevated temperature, causing the accuracy of the lens surfaces to be poor. Thus, the method cannot be applied in applications in which high surface accuracy is required.

Preferred embodiments of the present invention may achieve one or more of the following:

to ameliorate the problems and disadvantages of the prior art by providing a process for preparing plastic lenses having a high refractive index, superior surface accuracy and superior optical properties than prior art plastic lenses; to provide colorless and transparent plastic lenses suitable for use in eyeglasses and cameras and processes for producing the same; to provide plastic lenses having high surface accuracy and excellent optical properties and processes for producing the same; to provide plastic lenses that are lightweight and have a high refractive index and processes for producing the same; to provide plastic lenses that are excellent in impact resistance and processes for producing the same.

EP-A-O,271,839 (which was published on 22 June 1988 i.e. after the priority date of the present application) discloses the use of internal mold releasing agents of the types used herein in the casting of urethane lenses formed using polythiols as the active hydrogen components. EP-A-0,235,743 also concerns urethane lenses using polythiols as the active hydrogen components. Use of an internal release agent is mentioned as a possibility. JP-A-62267316 concerns lens resins formed using specific polythiols. US-A-4689387 concerns lens resins formed using thiols which may also contain hydroxy-groups.

The invention provides a process for preparing plastic lenses, e.g. of a high refractive index, comprising forming a mixture containing (a) one or more polyisocyanate compounds(b) one or more polyol compounds and (c) at least one internal releasing agent as defined below; and casting and polymerizing the mixture to form a lens.

The lenses of the invention may be lightweight, excellent in impact resistance, have high surface accuracy, high refractive index, excellent optical properties, be colorless and transparent and thus be suitable for use as eyeglass lenses and camera lenses.

The present inventors have discovered that when an internal releasing agent is added to a monomer mixture prior to casting and polymerizing the same, plastic lenses having high surface accuracy and excellent optical properties can be manufactured extremely efficiently on an industrial scale using a glass mold without any specific mold release treatment on the mold surface.

The internal releasing agent for use in the process of the invention is selected from fluorine containing nonionic surface active agents, silicon containing nonionic surface active agents, alkyl quaternary ammonium salts, and acidic phosphates. The most suitable internal releasing agent for any particular application can be selected based upon the combination of monomers employed, the conditions for polymerization, economy and ease of handling.

The internal releasing agents may be used alone or in the form of a mixture of two or more thereof.

The fluorine containing nonionic surface active agents and the silicon containing nonionic surface active agents, which may be used as the internal releasing agents in the present invention, may be compounds

2

each having a perfluoroalkyl group or a dimethylpolysiloxane group, a hydroxyalkyl group and a phosphoric ester group. Exemplary fluorine containing nonionic surface active agents which are commercially available include Unidain™: DS-401 and DS-403 (products of Daikin Kogyo Co., Ltd.), F-Top™: EF122A, EF126 and EF301 (products of Shinakita Chemical Co., Ltd.). An exemplary silicon containing nonionic surface active agent is a trial product Q2-120A of Dow Chemical Co.

The alkyl quaternary ammonium salts which may be used as the internal releasing agents in the present invention are known as cationic surface active agents. Exemplary suitable alkyl quaternary ammonium salts for use in the process of the invention include halogen salts, phosphates and sulfates of alkyl quaternary ammonium. Exemplary suitable chlorides thereof include trimethylacetylammonium chloride, trimethylstearylammonium chloride, dimethylethylcetylammonium chloride, triethyldodecylammonium chloride, trioctylmethylammonium chloride and diethylcyclohexyldodecylammonium chloride.

Exemplary suitable acidic phosphate compounds for use as the internal releasing agent in the present invention include isopropyl acid phosphate, diisopropyl acid phosphate, butyl acid phosphate, dibutyl acid phosphate, octyl acid phosphate, dioctyl acid phosphate, isodecyl acid phosphate, diisodecyl acid phosphate, tridecanol acid phosphate and bis(tridecanol acid) phosphate.

The amount of the internal releasing agent, which may be used alone or in a mixture of two or more thereof, is from about 0.1 to about 10,000 ppm, preferably from about 1 to about 5,000 ppm with respect to the total weight of a monomer mixture.

When the amount of internal releasing agent is less than 0.1 ppm, mold release characteristics are poor; when it is in excess of 10,000 ppm, turbidity takes place in the prepared lenses, and each lens is prematurely separated from the mold during polymerization and the surface accuracy of the lenses deteriorates.

Exemplary suitable polyisocyanate compounds useful in the process of the invention include aliphatic polyisocyanate compounds such as ethylene diisocyanate, trimethylene diisocyanate, tetramethylene diisocyanate, hexamethylene diisocyanate, octamethylene diisocyanate, nonanemethylene diisocyanate, 2,2'-dimethylpentane diisocyanate, 2,2,4-trimethylhexane diisocyanate, decamethylene diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, 2,5,7-trimethyl-1,8-diisocyanato-5-isocyanatomethyloctane, bis(isocyanatoethyl) carbonate, bis(isocyanatoethyl) ether, 1,4-butylene glycol dipropyl ether-ω,ω'-diisocyanate, lysine diisocyanatomethyl ester, lysine triisocyanate, 2-isocyanatoethyl-2,6-diisocyanato hexanoate, 2-isocyanatopropyl-2,6-diisocyanato hexamoate, xylylene diisocyanate, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethyl) diphenyl ether, bis(isocyanatoethyl) phthalate, mesitylylene triisocyanate and 2,6-di(isocyanatomethyl)furan; alicyclic polyisocyanates such as isophorone diisocyanate, bis(diisocyanatomethyl)cyclohexane, dicyclohexylmethane diisocyanate, cyclohexane diisocyanate, methylcyclohexane diisocyanate, dicyclohexyldimethylmethane diisocyanate, 2,2'-dimethyldicyclohexylmethane diisocyanate, bis(4-isocyanato-n-butylidene)-pentaerythritol, dimer acid diisocyanate, 2-isocyanatomethyl-3-(3-isocyanatopropyl)-5-isocyanatomethyl-bicyclo(2,2,1)-heptane, 2-isocyanatomethyl-3-(3-isocyanatopropyl)-6-isocyanatomethyl-bicyclo-(2,2,1)-heptane, 2-isocyanatomethyl-2-(3-isocyanatopropyl)-5-isocyanatomethyl-bicyclo-(2,2,1)-heptane, 2-isocyanatomethyl-2-(3-isocyanatopropyl)-6-isocyanatomethyl-bicyclo(2,2,1)-heptane, 2-isocyanatomethyl-3-(3-isocyanatopropyl)-5-(2-isocyanatoethyl)-bicyclo-(2,2,1)-heptane, 2-isocyanatomethyl-3-(3-isocyanatopropyl)-6-(2-isocyanatoethyl)-bicyclo-(2,2,1)-heptane, 2-isocyanatomethyl-2-(3-isocyanatopropyl)-5-(2-isocyanatoethyl)-bicyclo-(2,2,1)-heptane and 2-isocyanatomethyl-2-(3-isocyanatopropyl)-6-(2-isocyanatoethyl)-bicyclo-(2,2,1)-heptane; and aromatic polyisocyanates such as phenylene diisocyanate, tolylene diisocyanate, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, naphthalene diisocyanate, methylnaphthalene diisocyanate, biphenyl diisocyanate, tolidine diisocyanate, 4,4'-diphenylmethane diisocyanate, 3,3'-dimethyldiphenylmethane-4,4'-diisocyanate, bibenzyl-4,4'-diisocyanate,bis(isocyanatophenyl)ethylene, 3,3'-dimethoxybiphenyl-4,4'-diisocyanate, triphenylmethane triisocyanate, polymeric MDI, naphthalene triisocyanate, diphenylmethane-2,4,4'-triisocyanate, 3-methyldiphenylmethane-4,6,4'-triisocyanate, 4-methyl-diphenylmethane-3,5,2',4',6'-pentaisocyanate, phenylisocyanatomethyl isocyanate, phenylisocyanatoethyl isocyanate, tetrahydronaphthylene diisocyanate, hexahydrobenzene diisocyanate, hexahydrodiphenylmethane-4,4'-diisocyanate, diphenyl ether diisocyanate, ethylene glycol diphenyl ether diisocyanate, 1,3-propylene glycol diphenyl ether diisocyanate, benzophenone diisocyanate, diethylene glycol diphenyl ether diisocyanate, dibenzofuran diisocyanate, carbazole diisocyanate, ethylcarbazole diisocyanate and dichlorocarbazole diisocyanate. In addition, halogen-substituted compounds such as chlorine-substituted and bromine-substituted compounds,

EP 0 329 388 B1

alkyl-substituted compounds, alkoxy-substituted compounds, nitro-substituted compounds, polyvalent alcohol-modified prepolymer type compounds, carbodiimido-modified compounds, urea-modified compounds, biuret-modified compounds of the polyisocyanate compounds, products of dimerization and trimerization reactions of the polyisocyanate compounds may be employed.

The polyisocyanate compounds may be used alone or in the form of a mixture of two or more thereof.

Exemplary polyol compounds that contain no sulfur atom suitable for use in the process of the invention include ethylene glycol, diethylene glycol, propylene glycol, dipropylene glycol, butylene glycol, neopentyl glycol, glycerin, trimethylolethane, trimethylolpropane, butanetriol, 1,2-methyl glycoside, pentaerythritol, dipentaerythritol, tripentaerythritol, sorbitol, erythritol, threitol, ribitol, arabinitol, xylitol, allitol, mannitol, dorcitol, iditol, glycol, inositol, hexanetriol, triglycerol, diglycerol, triethylene glycol, polyethylene glycol, tris-(2-hydroxyethyl) isocyanurate, cyclobutanediol, cyclopentanediol, cyclohexanediol, cycloheptanediol, cyclooctanediol, cyclohexane dimethanol, hydroxypropylcyclohexanol, tricyclo(5,2,1,0$^{2.6}$)decane dimethanol, bicyclo(4,3,0)nonanediol, dicyclohexanediol, tricyclo(5,3,1,1)dodecanediol, bicyclo(4,3,0)nonane dimethanol, tricyclo(5,3,1,1)dodecane diethanol, hydroxypropyltricyclo(5,3,1,1)dodecanol,spiro(3,4)octanediol, butylcyclohexanediol, 1,1'-bicyclohexylidenediol, cyclohexanetriol, maltitol, lactitol, dihydroxynaphthalene, trihydroxynaphthalene, tetrahydroxynaphthalene, dihydroxybenzene, benzenetriol, biphenyltetraol, pyrogallol, (hydroxynaphthyl)pyrogallol, trihydroxyphenanthrene, bisphenol A, bisphenol F, xylylene glycol, di(2-hydroxyethoxy)benzene, bisphenol A-bis-(2-hydroxyethyl ether), tetrabromobisphenol A, tetrabromobisphenol A-bis(2-hydroxy ethyl ether), dibromoneopentyl glycol and epoxy resin; condensation reaction products of these polyols and organic polybasic acids such as oxalic acid, glutamic acid, adipic acid, acetic acid, propionic acid, cyclohexanecarboxylic acid, $\beta$-oxycyclohexanepropionic acid, dimer acid, phthalic acid, isophthalic acid, salicylic acid, 3-bromopropionic acid, 2-bromoglycolic acid, dicarboxycyclohexane, pyromellitic acid, butanetetracarboxylic acid and bromophthalic acid; addition reaction products of the polyol compounds and alkylene oxides such as ethylene oxide and propylene oxide; and addition reaction products of alkylene polyamines and alkylene oxides such as ethylene oxide and propylene oxide.

Furthermore, halogen-substituted compounds such as chlorine-substituted and bromine-substituted compounds of the polyol compounds may also be employed.

Exemplary polyol compounds containing at least one sulfur atom suitable for use in the process of the invention include bis[4-(hydroxyethoxy)phenyl] sulfide, bis[4-(2-hydroxypropoxy)phenyl] sulfide, bis-[4-(2,3-dihydroxypropoxy)phenyl] sulfide, bis-[4,(4-hydroxycyclohexyloxy) sulfide, bis-[2-methyl-4-(hydroxyethoxy)-6-butylphenyl] sulfide and compounds prepared by adding ethylene oxide and/or propylene oxide to these sulfides in a ratio of three or less molecules of the oxide per hydroxyl group of each sulfide on the average, di-(2-hydroxyethyl) sulfide, 1,2-bis-(2-hydroxyethylmercapto)ethane, bis-(2-hydroxyethyl) disulfide, 1,4-dithian-2,5-diol, bis(2,3-dihydroxypropyl) sulfide, tetrakis(4-hydroxy-2-thiabutyl)methane, bis(4-hydroxyphenyl) sulfone (trade name Bisphenol S), tetrabromobisphenol S, tetramethylbisphenol S, 4,4'-thiobis(6-tert-butyl-3-methylphenol) and 1,3-bis(2-hydroxyethylthioethyl)-cyclohexane. Halogen-substituted compounds such as chlorine-substituted and bromine-substituted compounds of the polyol compounds may also be employed.

The polyol compounds may be used alone or in the form of a mixture of two or more thereof.

The molar ratio of the polyisocyanate compound to the polyol compound is from about 0.5 to about 3.0, preferably from about 0.5 to about 1.5 of functional isocyanate group per mole of functional OH group.

In the plastic lens of the present invention, a urethane resin is used as a raw material, and therefore in the plastic lens a urethane bond exists between an isocyanate group and a hydroxyl group. However, the plastic lens of the present case may also contain an allophanate bond, a urea bond, a biuret bond. For example, it may be desirable to further react the isocyanate group with the urethane bond to increase the crosslink density. Such a reaction may be carried out at a temperature of at least 100°C and the isocyanate component should be used in an excess amount. Alternatively, an amine compound or the like may also be used to produce a urea bond or biuret bond. When the isocyanate compound is reacted with a compound other than the hydroxyl compound attention should be paid to coloring.

Furthermore, in the present invention, various additives may be added to the above-mentioned raw materials. Exemplary suitable additives include a chain extender, a crosslinking agent, a light stabilizer, an ultraviolet absorber, an anti-oxidant, an oil-soluble dye and a filler.

The reaction rate may be adjusted to a desired level by adding a known reaction catalyst useful in the manufacture of a polyurethane.

The plastic lens of the present invention can be prepared by cast polymerization. One or more of polyisocyanate compounds and one or more polyol compounds are mixed to form a mixture. At least one internal releasing agent is added to the mixture. The resulting mixture is then poured into a mold, followed

4

by the polymerization.

Polymerization is usually carried out at from about -50°C to about 200°C and in from about 0.5 to about 72 hours, depending upon the types of monomers and mold releasing agent employed.

The thus polymerized lenses may be subjected to an annealing treatment, if necessary.

The plastic lenses of the present invention have high surface accuracy and excellent optical properties, are lightweight and excellent in impact resistance, and are suitable for lenses of glasses and cameras.

Moreover, the lenses of the present invention can be subjected to physical and chemical treatments such as a surface abrasion treatment, an antistatic treatment, a hard coat treatment, a non-reflactive coat treatment, a coloring treatment and a dimming treatment for the prevention of reflection, the enhancement of hardness, the improvement of abrasion resistance and chemical resistance, fog resistance, the supply of fashionability, and the like.

The invention will be further explained by the following examples which are intended to be purely exemplary of the invention. The refractive index, Abbe's number, mold release characteristics and appearance were evaluated by the following tests:

Refractive index and Abbe's number: They were measured at 20°C by the use of a Pulfrich refractometer.

Mold release characteristics: When a polymerized lens was released from a mold without resistance, the mold release characteristics were denoted by "O", and when a part or all of the lens was not released without resistance but required the driving in of a Teflon wedge between the lens and the mold, the release characteristics were denoted "X".

Appearance: It was evaluated by visual observation.

Example 1

50 g (0.30 mol) of hexamethylene diisocyanate, 27 g (0.30 mol) of 1,4-butanediol and 0.08 g of dodecanol acid phosphate were mixed. The resulting mixture was then poured into a mold composed of a glass mold and a gasket. Then the mold was gradually heated from room temperature to 120°C taking 24 hours, to complete the polymerization. After polymerization, the lens was easily released from the mold. The lens had high surface accuracy and was colorless. Moreover, it had a refractive index $n^{20}$ of 1.50 and an Abbe's number $\nu^{20}$ of 55.

Examples 2 to 21

Following the procedure of Example 1, lenses were prepared in composition ratios shown in Table 1. The results of performance tests are set forth in Table 1.

Comparative Examples 1 to 24

Following the procedure of Example 1 with the exception that the undermentioned mold treatments were carried out, lenses were prepared in composition ratios shown in Table 2. The results of performance tests are set forth in Table 2.

(1) No treatment ...... A glass mold was used without any release treatment.

(2) External release treatment ...... External mold releasing agent YSR-6209™ (product of Toshiba Silicon Co.) was applied and baked on the inner surface of a glass mold.

(3) Reuse of external release treatment ...... The glass mold obtained by the external release treatment was once employed for the polymerization and then used again without any further treatment.

(4) Use of PP mold ...... A polypropylene mold was prepared by injection molding and used in place of the glass mold without any surface treatment.

## Table 1 (I)

|  | Polyiso-cyanate | Active Hydrogen Compound | Internal Releas-ing Agent | Release Charac-teristics | Appear-ance | Refrac-tive Index | Abbe's Number |
|---|---|---|---|---|---|---|---|
| Exam-ple 2 | Dicyclo-hexyl-methane diiso-cyanate 0.30 mol | 1,4-Butanediol 0.30 mol | Unidain ODS-401 200 ppm | O | High surface accuracy, Trans-parent | 1.52 | 51 |
| Exam-ple 3 | Hexa-methylene diiso-cyanate 0.30 mol | Trimethylol-propane 0.20 mol | Trimethyl-cetyl-ammonium chloride 500 ppm | O | " | 1.51 | 54 |
| Exam-ple 4 | Dicyclohexyl-methane diiso-cyanate 0.60 mol | Bisphenol A 0.30 mol Trimethylol-propane 0.20 mol | Diiso-propyl-acid phosphate 1000 ppm | O | " | 1.54 | 42 |
| Exam-ple 5 | m-Xylylene diiso-cyanate 0.60 mol | 1,4-Cyclohex-anedimethanol 0.15 mol Trimethylol propane 0.10 mol | F-top EF301 150 ppm | O | " | 1.57 | 36 |

Table 1 (II)

| | Polyiso-cyanate | Active Hydrogen Compound | Internal Releas-ing Agent | Release Charac-teristics | Appear-ance | Refrac-tive Index | Abbe's Number |
|---|---|---|---|---|---|---|---|
| Example 6 | Isophorone diiso-cyanate 0.60 mol | Bisphenol A 0.30 mol Trimethylol propane 0.20 mol | Octylacid phosphate 500 ppm | O | High surface accuracy, Trans-parent | 1.54 | 44 |
| Example 7 | Dicyclo-hexyl-methane diiso-cyanate 0.60 mol | 1,4-Cyclohex-anedimethanol 0.30 mol Trimethylol-propane 0.20 mol | Octylacid phosphate 800 ppm | O | " | 1.53 | 50 |
| Example 8 | Tolylene diiso-cyanate 0.60 mol | 1,4-Cyclo-hexanedi-methanol 0.30 mol Trimethylol-propane 0.20 mol | " | O | " | 1.58 | 35 |
| Example 9 | m-Xylylene diiso-cyanate 0.20 mol | Tetrabromo-bisphenol A 0.10 mol Trimethylol-propane 0.06 mol | Unidain DS-401 250 ppm | O | " | 1.60 | 33 |

Table 1 (III)

| | Polyiso-cyanate | Active Hydrogen Compound | Internal Releas-ing Agent | Release Charac-teristics | Appear-ance | Refrac-tive Index | Abbe's Number |
|---|---|---|---|---|---|---|---|
| Exam-ple 10 | m-Xylylene diiso-cyanate 0.05 mol | di-(2-Hydroxyethyl) sulfide 0.05 mol | Unidain DS-401 1000 ppm | O | High surface accuracy Trans-parent | 1.59 | 38 |
| Exam-ple 11 | Hexa-methylene diios-cyanate 0.08 mol | Tetrakis-(4-hydroxy-2-thiabutyl)-methane 0.04 mol | Unidain ODS-401 200 ppm | O | " | 1.56 | 45 |
| Exam-ple 12 | m-Xylylene diiso-cyanate 0.08 mol | " | Diiso-propylacid phosphate 500 ppm | O | " | 1.61 | 37 |
| Exam-ple 13 | Lysine triiso-cyanate 0.04 mol | " 0.03 mol | Trimethyl-acetyl-ammonium chloride 1000 ppm | O | " | 1.57 | 44 |
| Exam-ple 14 | m-Xylylene diiso-cyanate 0.08 mol | 1,2-Bis-(2-hydroxyethyl-mercapto)-ethane 0.08 mol | Tridecanol-acid phosphate 10000 ppm | O | " | 1.60 | 38 |

## Table 1 (IV)

|  | Polyiso-cyanate | Active Hydrogen Compound | Internal Releas-ing Agent | Release Charac-teristics | Appear-ance | Refrac-tive Index | Abbe's Number |
|---|---|---|---|---|---|---|---|
| Exam-ple 15 | Hexa-methylene diiso-cyanate 0.08 mol | di-(2-Hydroxyethyl) sulfide 0.08 mol | F-top EF-122A 150 ppm | O | High surface accuracry, Trans-parent | 1.56 | 44 |
| Exam-ple 16 | Tetra-chloro-xylylene diiso-cyanate 0.08 mol | " | Diiso-propylacid phosphate 800 ppm | O | " | 1.61 | 37 |
| Exam-ple 17 | m-Xylylene diiso-cyanate 0.08 mol | Bis[4-hydroxy-ethoxyl)-phenyl] sulfide 0.08 mol | Trimethyl-acetyl-ammonium chloride 200 ppm | O | " | 1.61 | 34 |
| Exam-ple 18 | 4,4'-Di-phenyl-methane diiso-0.09 | Bis[4-(2-hydroxy-propoxy)phenyl] sulfide 0.03 mol Bis[4-(2,3-dihydroxypro-poxy)phenyl sulfide 0.03 mol | " | O | " | 1.62 | 31 |

EP 0 329 388 B1

## Table 1 (VII)

| | Polyiso-cyanate | Active Hydrogen Compound | Internal Releas-ing Agent | Release Charac-teristics | Appear-ance | Refrac-tive Index | Abbe's Number |
|---|---|---|---|---|---|---|---|
| Example 19 | " | Trimethylol-propane 0.04 mol (2-Hydroxy-ethyl) sulfide 0.04 mol | Unidain DS-401 1000 ppm | O | " | 1.56 | 38 |
| Example 20 | Hexa-methylene diiso-cyanate 0.01 mol | Trimethylol-propane 0.04 mol 1,2-Bis(2-mer-captoethyl-thio)ethane 0.04 mol | F-Top EF-122A 200 ppm | O | " | 1.57 | 42 |

## Table 1    (VIII)

| | Polyiso-cyanate | Active Hydrogen Compound | Internal Releas-ing Agent | Release Charac-teristics | Appear-ance | Refrac-tive Index | Abbe's Number |
|---|---|---|---|---|---|---|---|
| Example 21 | Hexa-methylene diiso-cyanate 0.01 mol | di-(2-Hydroxyethyl sulfide) 0.04 mol 1,2-Bis(2-mer-captoethyl-thio)ethane 0.04 mol | Diisopropyl acid phosphate 500 ppm | O | " | 1.56 | 41 |

Table 2 (I)

| | Polyiso-cyanate | Active Hydrogen Compound | Mold Treat-ment | Release Charac-teristics | Appear-ance | Refrac-tive Index | Abbe's Number |
|---|---|---|---|---|---|---|---|
| Comp. Ex. 1 | Hexa-methylene diiso-cyanate 0.30 mol | 1,4-Butanediol 0.30 mol | No treat-ment | X | - | - | - |
| Comp. Ex. 2 | " | " | External release treat-ment | O | Uneven surface, Trans-parent | 1.50 | 55 |
| Comp. Ex. 3 | " | " | Reuse of external release treatment (mold used in Comp. Ex. 2) | X | - | - | - |
| Comp. Ex. 4 | " | " | Use of PP mold | O | Bad surface accuracy, Trans-parent | 1.50 | 55 |

EP 0 329 388 B1

Table 2 (II)

| | Polyiso-cyanate | Active Hydrogen Compound | Mold Treatment | Release Characteristics | Appearance | Refractive Index | Abbe's Number |
|---|---|---|---|---|---|---|---|
| Comp. Ex. 5 | Dicyclo-hexyl-methane diiso-cyanate 0.30 mol | 1,4-Butanediol 0.30 mol | No treatment | X | - | - | - |
| Comp. Ex. 6 | " | " | External release treatment | O | Uneven surface, Transparent | 1.52 | 51 |
| Comp. Ex. 7 | " | " | Reuse of external release treatment (mold used in Comp. Ex. 6) | X | - | - | - |
| Comp. Ex. 8 | " | 1,4-Cyclo-hexanedi-methanol 0.15 mol Trimethylol-propane 0.10 mol | Use of PP mold | O | Bad surface accuracy, Transparent | 1.53 | 50 |

EP 0 329 388 B1

## Table 2 (III)

| | Polyisocyanate | Active Hydrogen Compound | Mold Treatment | Release Characteristics | Appearance | Refractive Index | Abbe's Number |
|---|---|---|---|---|---|---|---|
| Comp. Ex. 9 | Xylylene diisocyanate 0.05 mol | 2-Hydroxyethyl sulfide 0.05 mol | No treatment | X | – | – | – |
| Comp. Ex. 10 | " | " | External release treatment | O | Uneven surface, Transparent | 1.59 | 38 |
| Comp. Ex. 11 | " | " | Reuse of external release treatment (mold used in Comp. Ex. 2) | X | – | – | – |
| Comp. Ex. 12 | " | " | Use of PP mold | O | Bad surface accuracy, Transparent | 1.59 | 38 |

EP 0 329 388 B1

EP 0 329 388 B1

<u>Table 2 (IV)</u>

| | Polyiso-cyanate | Active Hydrogen Compound | Mold Treat-ment | Release Charac-teristics | Appear-ance | Refrac-tive Index | Abbe's Number |
|---|---|---|---|---|---|---|---|
| Comp. Ex. 13 | Lysine triiso-cyanate 0.04 mol | Tetrakis-(4-hydroxy-2-thiabutyl) methane 0.03 mol | No treat-ment | X | - | - | - |
| Comp. Ex. 14 | " | " | External release treat-ment | O | Uneven surface, Trans-parent | 1.57 | 44 |
| Comp. Ex. 15 | " | " | Reuse of external release treatment (mold used in Comp. Ex. 6) | X | - | - | - |
| Comp. Ex. 16 | Xylylene diiso-cyanate 0.06 mol | " | Use of PP mold | O | Bad surface accuracy, Trans-parent | 1.61 | 37 |

## Table 2 (V)

| | Polyiso-cyanate | Active Hydrogen Compound | Mold Treatment | Release Characteristics | Appearance | Refractive Index | Abbe's Number |
|---|---|---|---|---|---|---|---|
| Comp. Ex. 17 | Xylylene diisocyanate 0.10 mol | Tetrakis(2-mercaptoethyl-thiomethyl)-methane 0.05 mol | No treatment | X | - | - | - |
| Comp. Ex. 18 | " | " | External release treatment | O | Uneven surface, Transparent | 1.66 | 33 |
| Comp. Ex. 19 | " | " | Reuse of external release treatment (mold used in Comp. Ex. 2) | X | - | - | - |
| Comp. Ex. 20 | " | " | Use of PP mold | O | Bad surface accuracy, Transparent | 1.66 | 33 |

Table 2 (VI)

| | Polyisocyanate | Active Hydrogen Compound | Mold Treatment | Release Characteristics | Appearance | Refractive Index | Abbe's Number |
|---|---|---|---|---|---|---|---|
| Comp. Ex. 21 | Hexamethylene diisocyanate 0.10 mol | Tetrakis(2-mercaptoethylthiomethyl)-methane 0.05 mol | No treatment | X | - | - | - |
| Comp. Ex. 22 | " | " | External release treatment | O | Uneven surface, Transparent | 1.62 | 42 |
| Comp. Ex. 23 | " | " | Reuse of external release treatment (mold used in Comp. Ex. 6) | X | - | - | - |
| Comp. Ex. 24 | Tetrachloroxylylene diisocyanate 0.10 mol | Dithioglycolic acid bis(2-mercapto ethyl ester) 0.10 mol | Use of PP mold | O | Bad surface accuracy, Transparent | 1.66 | 33 |

## Claims

1. A process for producing a plastic lens comprising addition of at least one internal mold releasing agent to a mixture of one or more polyisocyanate compounds and one or more polyol compounds followed

17

EP 0 329 388 B1

by cast polymerization, wherein the internal mold releasing agent is selected from fluorine containing nonionic surface active agents, silicon containing nonionic surface active agents, alkyl quaternary ammonium salts, and acidic phosphates.

2.  The process of claim 1 wherein the polyol compounds are sulfur containing polyol compounds.

3.  The process of claim 1 or 2 wherein the proportion of the polyisocyanate compound to the polyol compound is a molar ratio of from 0.5 to 3.0 moles of functional isocyanate group per mole of functional (SH + OH) group.

4.  The process of any preceding claim wherein the internal mold releasing agent is present in an amount of from 0.1 to 10,000 ppm based on the total parts of the polyisocyanate compound and the active hydrogen compound.

5.  The process of any preceding claim wherein cast polymerization is carried out at a temperature of from -50°C to 200°C.

6.  A plastic lens as produced by the process of any preceding claim.

**Patentansprüche**

1.  Ein Verfahren zur Herstellung einer Kunststofflinse, das die Zugabe wenigstens eines eingearbeiteten Formentrennmittels zu einem Gemisch aus einer oder mehreren Polyisocyanat-Verbindung(en) und einer oder mehreren Polyol-Verbindung(en) mit nachfolgender Gießpolymerisation umfaßt, bei dem das eingearbeitete Formentrennmittel aus Fluor enthaltenden nicht-ionischen oberflächenaktiven Mitteln, Silizium enthaltenden nichtionischen oberflächenaktiven Mitteln, quartären Alkylammoniumsalzen und sauren Phosphaten ausgewählt ist.

2.  Das Verfahren nach Anspruch 1, bei dem die Polyol-Verbindungen Schwefel enthaltende Polyol-Verbindungen sind.

3.  Das Verfahren nach Anspruch 1 oder 2, bei dem das Verhältnis der Polyisocyanat-Verbindung zu der Polyol-Verbindung ein molares Verhältnis von 0,5 bis 3,0 Mol funktionelle Isocyanat-Gruppe pro Mol funktioneller (SH + OH) Gruppe ist.

4.  Das Verfahren nach einem der vorhergehenden Ansprüche, bei dem das eingearbeitete Formentrennmittel in einer Menge von 0,1 bis 10000 ppm, bezogen auf die Gesamtheit der Teile der Polyisocyanat-Verbindung und der aktiven Wasserstoff-Verbindung, vorhanden ist.

5.  Das Verfahren nach einem der vorhergehenden Ansprüche, bei dem die Gießpolymerisation bei einer Temperatur von - 50°C bis 200 °C durchgeführt wird.

6.  Eine Kunststofflinse, die durch das Verfahren nach einem der vorhergehenden Ansprüche hergestellt ist.

**Revendications**

1.  Un procédé pour la préparation d'une lentille plastique comprenant l'addition d'au moins un agent de démoulage interne à un mélange d'un ou de plusieurs polyisocyanates et d'un ou de plusieurs polyols, puis la polymérisation par coulée, dans lequel l'agent de démoulage interne est choisi parmi les agents tensio-actifs non ioniques fluorés, les agents tensio-actifs non ioniques siliciés, les sels d'alkylammonium quaternaire et les phosphates acides.

2.  Le procédé de la revendication 1, dans lequel les polyols sont des polyols contenant du soufre.

3.  Le procédé de la revendication 1 ou 2, dans lequel la proportion du polyisocyanate au polyol est un rapport molaire de 0,5 à 3,0 moles de groupe fonctionnel isocyanate par mole de groupe fonctionnel (SH + OH).

18

4.  Le procédé de l'une quelconque des revendications précédentes, dans lequel l'agent de démoulage interne est présent en une quantité de 0,1 à 10 000 ppm, relativement aux parties totales du polyisocyanate et du composé à hydrogène actif.

5.  Le procédé de l'une quelconque des revendications précédentes, dans lequel la polymérisation par coulée est réalisée à une température de -50°C à 200°C.

6.  Une lentille plastique produite selon le procédé de l'une quelconque des revendications précédentes.